# EUROPÄISCHE PATENTANMELDUNG

(11) **EP 4 063 047 A1**
(43) Veröffentlichungstag der Anmeldung: **28.09.2022**
(21) Anmeldenummer: 21212135.4
(22) Anmeldetag: 03.12.2021
(51) Int. Cl.: B23B 29/12, B23B 29/04, B33Y 80/00

(54) **VERFAHREN ZUR FORMGEBUNG EINES WERKZEUGHALTERS ODER EINES WERKZEUGGRUNDHALTERS SOWIE WERKZEUGHALTER ODER WERKZEUGGRUNDHALTER**

(30) Priorität: 22.03.2021 DE 202021101436 U
(71) Anmelder: ZCC Cutting Tools Europe GmbH, 40472 Düsseldorf (DE)
(72) Erfinder: Agustin-Paya, Jose, 45478 Mülheim an der Ruhr (DE)
(74) Vertreter: Patentanwälte Vomberg & Schart

(57) **Zusammenfassung**

Die Erfindung betrifft ein Verfahren zur Formgebung eines Werkzeughalters (10) oder Werkzeuggrundhalters (101) sowie einen solchen Werkzeughalter oder Werkzeuggrundhalter, der erfindungsgemäß eine Grundform besitzt, die zur ausreichenden Halterung des Zerspanungswerkzeugs oder der Kassette oder des Werkzeughalters im Ruhezustand, d.h. ohne Belastung durch eine Zerspanungsoperation ausgebildet ist, wobei diese Grundform nur an den geometrischen Orten durch Materialanhäufungen verstärkt ist bzw. wird, die durch beim Zerspanen auftretende Kräfte, nämlich Schnittkräfte und Nebenkräfte als Widerlager beansprucht werden. Ausserdem betrifft die Erfindung einen Werkzeughalter oder Werkzeuggrundhalter.

## Beschreibung

Die Erfindung betrifft ein Verfahren zur Formgebung eines Werkzeughalters mit einer Aufnahme für ein Zerspanungswerkzeug, oder eines Werkzeuggrundhalters mit einer Aufnahme für eine Kassette oder für einen Werkzeughalter zur Aufnahme eines Zerspanungswerkzeugs, wobei das Zerspanungswerkzeug mittels eines Spannelementes, nämlich einer Spannpratze oder einer Spannschraube lösbar fixiert ist.

Die Erfindung betrifft ferner einen Werkzeughalter oder Werkzeuggrundhalter.

Unter einem Werkzeuggrundhalter im Sinne der vorliegenden Erfindung werden auch Werkzeughalter angesprochen, die über eine Aufnahmeöffnung für eine Kassette als Trägerkörper eines Werkzeugs verfügen wie z.B. Klemmhalter, die beispielsweise in der DE 20 2019 103 574 U1 beschrieben werden. Werkzeughalter oder Werkzeuggrundhalter müssen sowohl eine reproduzierbare lagegenaue Positionierung des Schneidwerkzeugs erlauben als auch eine während der Zerspanung optimale Einspannung des Werkzeugs, die in der Lage ist, den auftretenden Schnittkräften standzuhalten. Während Zerspanungswerkzeuge in Form von Schneidplatten, die als Wendeschneidplatten auswechselbar bei Zerspanungsarbeiten wie dem Drehen, Bohren oder Fräsen verwendet werden, üblicherweise aus einem Hartmetall, das ggf. eine Beschichtung aufweist, bestehen, wird für die Werkzeughalter und Werkzeuggrundhalter ein preisgünstigerer Stahl verwendet.

Aus der DE 10 2016 108 507 A1 ist ein Schneidwerkzeug mit einer Spanfläche sowie Freiflächen bekannt, das einen inneren Hohlraum besitzt, der ein oder mehrere Gitterstrukturen umfasst. Diese Gitterstrukturen sollen eine leichtgewichtige Konstruktion, welche eine preiswertere Herstellung ermöglichen soll. Allerdings wird die Kosteneinsparung durch geringere benötigte Hartmetallmengen durch höhere Fertigungskosten kompensiert. Die besagten Schneideinsätze bzw. Werkzeuge sind im Übrigen Verschleißteile, die nach kurzzeitigem Gebrauch ausgetauscht werden müssen.

Aus der DE 10 2016 221 518 A1 ist ein Werkzeughalter für eine Zerspanungsmaschine bekannt, der einen Grundkörper mit einem Fixierbereich zum Fixieren eines Werkzeughalters in der Zerspanungsmaschine und einen Aufnahmebereich zum Aufnehmen und Fixieren eines Zerspanungswerkzeugs aufweist. Dieser Grundkörper soll zumindest teilweise aus einer Kavitäten aufweisenden Tragstruktur ausgebildet sein, wobei die Kavitäten mit einem partikulären Material gefüllt sind. Die Kavitäten können als Wabenstruktur geformt sein. Die Zielsetzung dieses Werkzeughalters besteht darin, eine aktive Werkzeugdämpfung im Betrieb zu gewährleisten. Hierzu sollen die Kavitäten jedoch mit einem partikulären Material gefüllt sein, beispielsweise einem Pulver.

Des Weiteren sind Werkzeughalter bekannt, die über Kanäle verfügen, durch welche ein Kühlschmierstoff transportiert wird, der unter Druck in den Zerspanungsbereich, beispielsweise über eine Spannpratze, eingespritzt wird.

Bei der Zerspannung, wie beim Drehen, Fräsen oder Bohren, drohen nicht nur Werkzeugschwingungen das Zerspanungsergebnis negativ zu beeinflussen, sondern insbesondere auch Schnittkräfte, die leicht zu einer Aufbiegung und damit einer Depositionierung des Zerspanungswerkzeugs führen. Nach dem bisherigen Stand der Technik wird diesem Mangel im Regelfall dadurch begegnet, dass der Werkzeughalter und der Werkzeuggrundhalter relativ massiv gebaut werden.

Es ist Aufgabe der vorliegenden Erfindung, ein Verfahren zur Formgebung eines Werkzeughalters oder eines Werkzeuggrundhalters sowie einen Werkzeughalter oder ein Werkzeuggrundhalter anzugeben, deren Eigenschaften verbessert sind, insbesondere im Hinblick auf eine preiswertere Herstellung und eine Optimierung der exakten gleichbleibenden Ausrichtung des Zerspanungswerkzeugs bei der Zerspanungsoperation.

Zur Lösung der gestellten Aufgabe wird das Verfahren nach Anspruch 1 vorgeschlagen, das dadurch gekennzeichnet ist, dass der Werkzeughalter oder der Werkzeuggrundhalter eine Grundform besitzt, die zur ausreichenden Halterung des Zerspanungswerkzeugs oder der Kassette oder des Werkzeughalters im Ruhezustand, d.h. ohne Belastung durch eine Zerspanungsoperation, ausgebildet ist und dass diese Grundform nur an den geometrischen Orten durch Materialanhäufungen verstärkt wird, die durch beim Zerspanen auftretende maximal möglichen bzw. zulässigen Kräfte, nämlich Schnittkräfte und Passivkräfte, als Widerlager beansprucht werden.

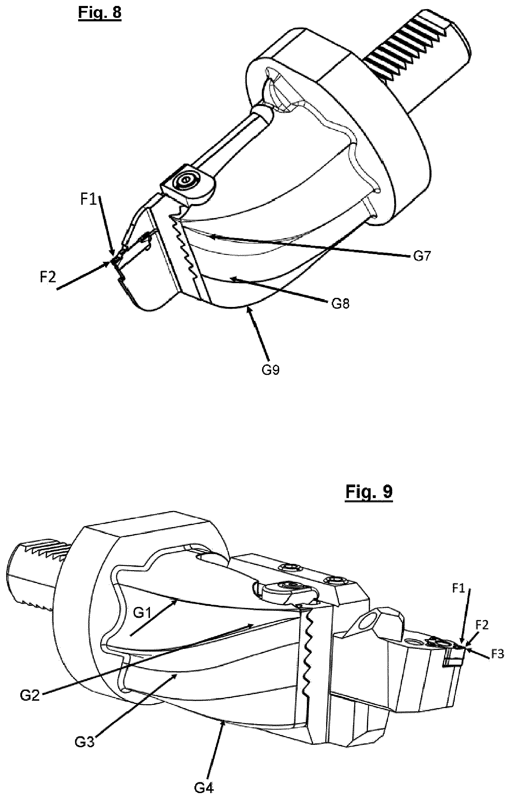

Bei der Zerspanung entstehen Kräfte durch den Scherwiderstand, der überwunden werden muss, und Reibungskräfte, die zwischen dem Werkstück und dem Zerspanungswerkzeug auftreten. So entstehen bei sog. Stechoperationen, die mit einem beispielsweise in der DE 20 2019 103 472 U1 dargestellten Werkzeug durchgeführt werden, eine Schnittkraft F₁ und eine Vorschubkraft F₂, deren Richtung der Fig. 8 zu entnehmen sind.

Wie aus Fig. 9 ersichtlich, entstehen beim Drehen eine Schnittkraft F₁, eine Vorschubkraft F₂ und eine Passivkraft F₃.

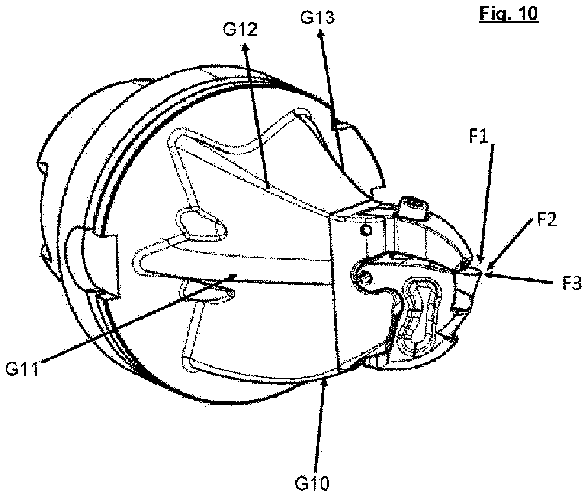

Fig. 10 zeigt ein Dreh- und Kopierwerkzeug, bei dem die Schnittkraft F₁, die Vorschubkraft F₂ und die Passivkraft F₃ eingetragen sind.

Die Schnittkraft ist insbesondere von der Spanungsdicke und dem zu zerspanenden Werkstoffs des Werkstücks aber auch vom Spanwinkel, der Schnitttiefe und der Schnittgeschwindigkeit abhängig, wobei für jedes Werkzeug maximale Schnitt-, Vorschub- und Passivkräfte definiert sind, von denen bei der Formgebung der erfindungsgemäßen Werkzeughalter oder Werkzeuggrundhalter jeweils auszugehen ist. Diese Kräfte müssen um eine gleichbleibend steuerbare Zerspanung durchführen zu können, durch entsprechende Widerlager aufgefangen werden. Solche Widerlager werden erfindungsgemäß durch Materialanhäufungen, in Figuren 8, 9 und 10 durch jeweils ausgeformte Rippen gebildet, deren Querschnitt umso größer gewählt werden muss, je größer die durch Pfeile G₁ bis G₄ bzw. G₇ bis G₉ oder G₁₀ bis G₁₃ dargestellten Gegenkräfte sein müssen.

Nach einer weiteren Ausgestaltung der Erfindung weist die Grundform des Werkzeughalters oder Werkzeuggrundhalters ganz oder teilweise eine Fachwerkstruktur auf. Eine solche Fachwerkstruktur hat zunächst einmal die Wirkung, dass das Gewicht des Werkzeughalters oder Werkzeuggrundhalters minimiert wird, was insbesondere beim Werkzeugwechsel, insbesondere, wenn dieser voll automatisch vorgenommen werden soll, Vorteile schafft. Die Fachwerkstruktur kann entweder in der Grundform vollständig oder nur in dem Oberflächenbereich ausgebildet sein, wobei auch hier Materialanhäufungen bzw. eine höhere Fachwerkstrukturdichte anzuordnen sind, wo größere Kräfte aufzuwenden sind. Grundsätzlich müssen alle Schnittkräfte und Nebenkräfte aufgefangen werden, weshalb Hohlräume oder Ausnehmungen nur dort an Werkzeughaltern oder Werkzeuggrundhaltern erlaubt sind, wo keine nennenswerten Schnittkräfte auftreten. Auf diese Weise wird der Werkzeuggrundhalter oder der Werkzeughalter gebrauchsgerecht aufgebaut.

Die Aufgabe wird ferner durch einen Werkzeughalter oder Werkzeuggrundhalter nach Anspruch 4 gelöst. Weiterbildungen dieses Werkzeughalters oder des Werkzeuggrundhalters sind in den Ansprüchen 5 und 6 beschrieben.

Ausführungsbeispiele der vorliegenden Erfindung sind aus den Zeichnungen ersichtlich. Es zeigen:
- Fig. 1a, b: jeweils Grundhalter wie sie nach dem Stand der Technik bekannt sind und Grundhalter nach der vorliegenden Erfindung,
- Fig. 2a: einen Werkzeuggrundhalter zur Aufnahme eines Klemmhalters,
- Fig. 2b: denselben Grundhalter mit einer körperstrukturierten Oberfläche,
- Fig. 3: eine Ausführungsform eines Werkzeuggrundhalters mit einer fachwerkartigen Ausgestaltung,
- Fig. 4, 5, 6, 7: weitere Ausführungsbeispiele,
- Fig. 8, 9, 10: jeweils Werkzeuge, bei denen die beim Zerspanen auftretenden Schnitt- und Nebenkräfte sowie die Gegenkräfte eingetragen sind.

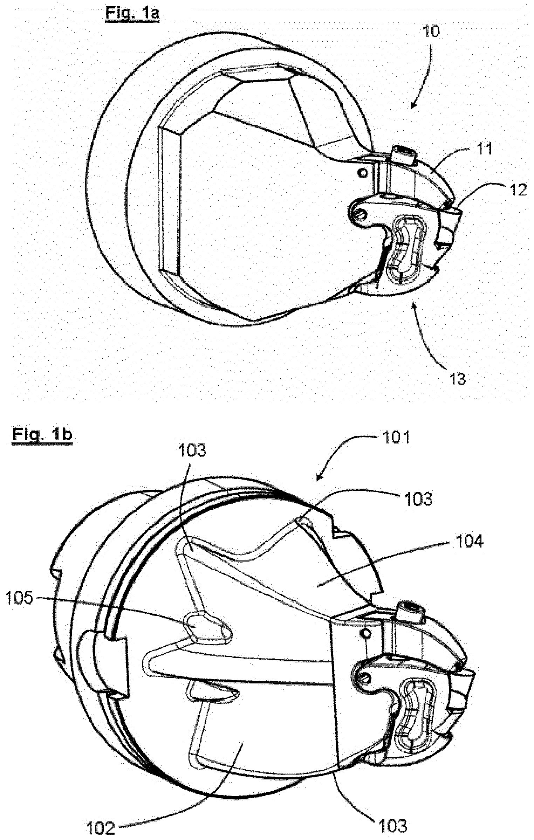

### Nach dem Stand der Technik sind die in Fig. 1a dargestellten

Werkzeuggrundhalter 10 bekannt, an denen eine Spannpratze 11 befestigt ist, die einen Schneideinsatz 12, der in einer Kassette 13 gelagert ist, durch Betätigung einer Spannschraube festklemmt.

Fig. 1b zeigt einen veränderten Werkzeuggrundhalter 101, der eine körperstrukturierte Oberfläche 102 aufweist, die aus Rippen 103, welche dazwischenliegende Ausnehmungen 104 einschließen, gebildet ist. Zusätzlich können noch weitere kleiner dimensionierte Stützprofile 105 vorgesehen sein.

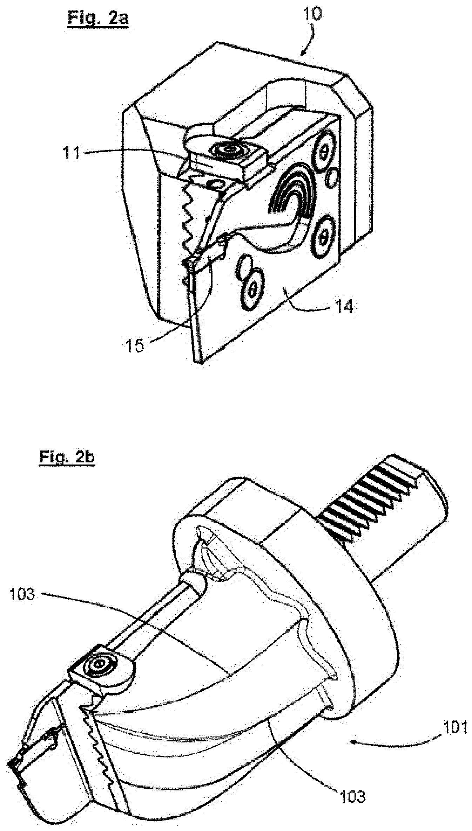

Fig. 2a zeigt einen Werkzeughalter 10 mit einer Spannpratze 11, die einen Klemmhalter 14 aufnimmt, in dessen Werkzeugaufnahme ein Stecheinsatz 15 einspannbar ist. Der erfindungsgemäße Werkzeuggrundhalter 101, der in Fig. 2b dargestellt ist, besitzt eine (hintere) körperstrukturierte Oberfläche mit einzelnen Rippen 103.

Bereits an den vorstehend beschriebenen Ausführungsbeispielen wird deutlich, dass der Werkzeuggrundhalter nach der vorliegenden Erfindung materialsparender zu fertigen ist und Widerlager in Form von Rippen nur dort besitzt, wo höhere Schnittkräfte auftreten. Die Massenersparnis erlaubt somit eine erhebliche Gewichtsreduzierung.

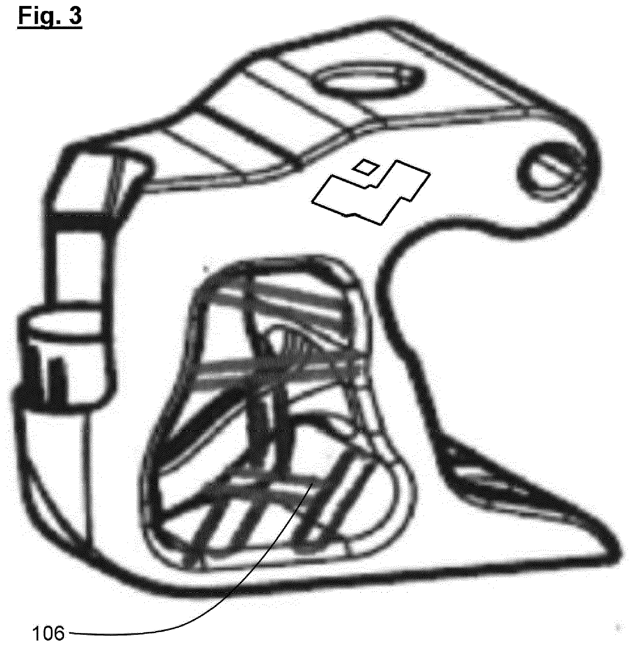

Der Werkzeuggrundhalter nach Fig. 3 besitzt eine Durchbrechung, in der eine Fachwerkstruktur 106 angeordnet ist. Die Anzahl der Knotenpunkte, welche unterschiedliche Stege miteinander verbinden sowie der Stegdurchmesser sowie die Steganordnung werden entsprechend der erfahrungsgemäß anzunehmenden Schnittkräfte orientiert.

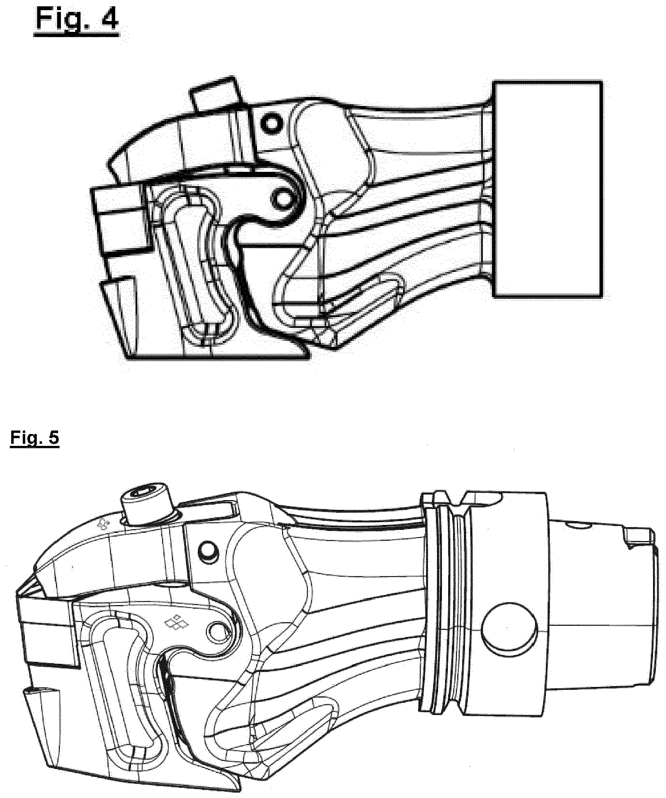

Weitere Ausführungsbeispiele unter Verwendung von Rippen und dazwischenliegenden Ausnehmungen sind Fig. 4 und Fig. 5 zu entnehmen.

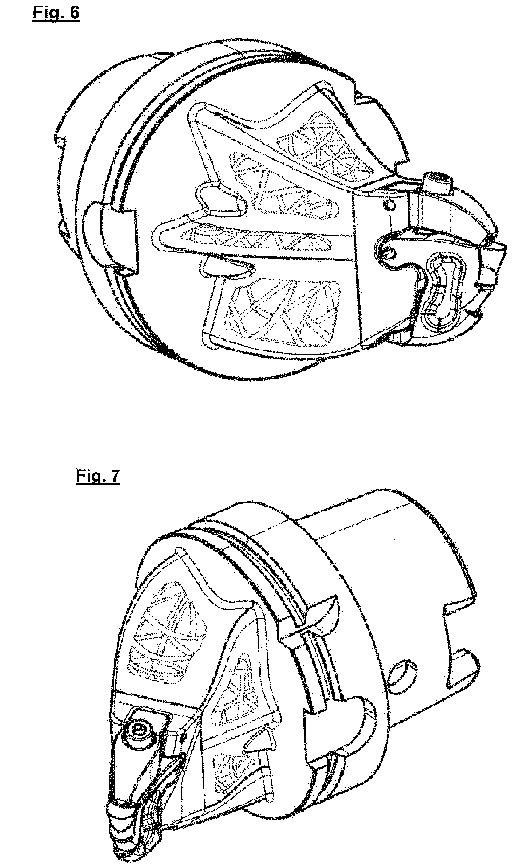

Die Ausführungsformen nach Fig. 6 und Fig. 7 zeigen die zusätzliche Variante, bei der in die jeweilige Körperoberfläche ein Fachwerkprofil eingearbeitet ist.

Die dargestellten Geometrien können mittels additiver Herstellverfahren, z.B. durch Laserschmelzen (SLM), selektives Lasersintern (SLS) oder einen 3D-Druck gefertigt werden. Diese Fertigungsmethoden erlauben komplexe geometrische Strukturen wie Hinterschnitte, Hohlräume oder Fachwerkstrukturen, die Formstabil herstellbar sind.

## Patentansprüche

1. Verfahren zur Formgebung eines Werkzeughalters (10) mit einer Aufnahme für ein Zerspanungswerkzeug oder eines Werkzeuggrundhalters (101) mit einer Aufnahme für eine Kassette oder für einen Werkzeughalter (10) zur Aufnahme eines Zerspanungswerkzeugs, wobei das Zerspanungswerkzeug mittels eines Spannelementes, nämlich einer Spannpratze (11) oder einer Spannschraube lösbar fixiert ist,
**dadurch gekennzeichnet, dass**
der Werkzeughalter (10) oder der Werkzeuggrundhalter (101) eine Grundform besitzt, die zur ausreichenden Halterung des Zerspanungswerkzeugs oder der Kassette oder des Werkzeughalters (10) im Ruhezustand, d.h. ohne Belastung durch eine Zerspanungsoperation, ausgebildet ist und dass diese Grundform nur an den geometrischen Orten durch Materialanhäufungen verstärkt wird, die durch beim Zerspanen auftretende Kräfte, nämlich Schnittkräfte (F₁) und Nebenkräfte (F₂, F₃) als Widerlager beansprucht werden.

2. Verfahren nach Anspruch 1, **dadurch gekennzeichnet, dass** die Materialanhäufungen rippenförmige Verstärkungen (103) sind.

3. Verfahren nach Anspruch 1 oder 2, **dadurch gekennzeichnet, dass** die Grundform ganz oder teilweise eine Fachwerkstruktur (106) aufweist.

4. Werkzeughalter mit einer Aufnahme für ein Zerspanungswerkzeug oder Werkzeuggrundhalter (101) mit einer Aufnahme für eine Kassette oder für einen Werkzeughalter (10) zur Aufnahme eines Zerspanungswerkzeugs, wobei das Zerspanungswerkzeug mittels eines Spannelementes, nämlich einer Spannpratze (11) oder einer Spannschraube lösbar fixiert ist,
**dadurch gekennzeichnet, dass**
der Werkzeughalter (10) oder der Werkzeuggrundhalter (101) eine Grundform besitzt, die zur ausreichenden Halterung des Zerspanungswerkzeugs oder der Kassette oder des Werkzeughalters im Ruhezustand, d.h. ohne Belastung durch eine Zerspanungsoperation, ausgebildet ist und dass diese Grundform nur an den geometrischen Orten durch Materialanhäufungen verstärkt ist, die durch beim Zerspanen auftretende Kräfte, nämlich Schnittkräfte (F₁) und Nebenkräfte (F₂, F₃) als Widerlager beansprucht werden.

5. Werkzeughalter oder Werkzeuggrundhalter nach Anspruch 4, **dadurch gekennzeichnet, dass** die Materialanhäufungen rippenförmige Verstärkungen sind.

6. Werkzeughalter oder Werkzeuggrundhalter nach Anspruch 4 oder 5, **dadurch gekennzeichnet, dass** die Grundform des Werkzeughalters (10) oder des Werkzeuggrundhalters (101) außerhalb der Werkzeugaufnahme eine strukturierte Oberfläche besitzt, die vorzugsweise ganz oder teilweise aus einem Fachwerkprofil besteht.
